# EUROPEAN PATENT APPLICATION

(11) **EP 4 641 777 A1**
(43) Date of publication of application: **29.10.2025**
(21) Application number: 25171246.9
(22) Date of filing: 17.04.2025
(51) Int. Cl.: H01M 50/103, H01M 50/15, H01M 50/627, H01M 50/636

(54) **COVER PLATE ASSEMBLY AND SINGLE-CELL BATTERY COMPRISING SAME**

(30) Priority: 23.04.2024 CN 202420846117 U
(71) Applicant: AESC Japan Ltd., Yokohama-Shi, Kanagawa 220-0012 (JP)
(72) Inventor: ZHAO, Gongwei, Jiangyin City, Wuxi City, Jiangsu Province, 214443 (CN)
(74) Representative: Becker, Eberhard

(57) **Abstract**

A cover plate assembly (2) and a single-cell battery (1) comprising the same are provided. The cover plate assembly (2) includes: a cover plate body (10) provided with a penetrating liquid injection hole (11) in a thickness direction (T) of the cover plate body (10); and an insulating member (20) including a first channel (23) communicating with the liquid injection hole (11) and a second channel (24) communicating with the first channel (23). By arranging the second channel (24) communicating with the first channel (23), electrolyte flows into an inner portion of the single-cell battery (1) through liquid outlets of different channels, and a liquid injection process is thereby accelerated.

## Description

### BACKGROUND

### Technical Field

The disclosure relates to a cover plate assembly and a single-cell battery comprising the same.

### Description of Related Art

At present, in a battery, the cover plate assembly includes the cover plate body and the insulating member covering one side of the cover plate body facing the terminal assembly (cell) located inside the battery. Generally, the insulating member abuts against the terminal assembly. As a result, when the battery cell is being filled with electrolyte, the electrolyte filling process is slow and the time it takes to flow to the large surface of the terminal assembly is prolonged.

### SUMMARY

The technical problem to be solved by the disclosure is to overcome the defect of the slow liquid injection process inside the cell in the related art, and a cover plate assembly and a single-cell battery comprising the same are provided.

The disclosure solves the above technical problems through the following technical solutions.

The disclosure provides a cover plate assembly including a cover plate body and an insulating member.

A penetrating liquid injection hole passes through the cover plate body in a thickness direction of the cover plate body.

The insulating member includes an insulating body and a convex portion arranged on one side of the insulating body facing the cover plate body. A liquid guiding through hole passes through the convex portion in the thickness direction. The liquid guiding through hole is aligned with the liquid injection hole to be a first channel communicating with the liquid injection hole.

The insulating member further includes a second channel communicating with the first channel. A first end opening of the second channel is opened on a side surface of the convex portion, and a second end opening of the second channel is opened on the insulating body.

In this technical solution, by arranging the second channel communicating with the first channel, opening the first end opening of the second channel on the side surface of the convex portion, and opening the second end opening of the second channel on the insulating body, electrolyte flows into an inner portion of the single-cell battery through liquid outlets of different channels, and a liquid injection process is thereby accelerated.

Preferably, the insulating body includes a bottom wall and a side wall. One end of the side wall is connected to the bottom wall, and the other end of the side wall extends toward the cover plate body.

The convex portion is arranged on one side of the bottom wall facing the cover plate body. The bottom wall and the side wall surround and form a flow chamber configured to connect the first end opening and the second end opening.

In this technical solution, through the arrangement of a specific structure of the insulating body, the flow chamber is formed on the side of the insulating body facing the cover plate body, so a channel connecting the first end opening and the second end opening is formed.

Preferably, the second end opening is opened on at least one of the side wall and the bottom wall.

In this technical solution, through the above arrangement, a specific arrangement position of the second end opening is provided. Compared to the arrangement of the second end opening on the bottom wall, through the arrangement of the second end opening on the side wall, a contact surface between the bottom wall and the terminal assembly is prevented from being an uneven surface with an opening. As such, adverse effects of the opening on the terminal assembly are avoided.

Preferably, the side wall includes: a first side wall and a second side wall arranged on both sides of the bottom wall in a width direction of the cover plate assembly.

The second end opening includes at least one of a first opening and a second opening. The first opening is an opening opened on the first side wall, and the second opening is an opening opened on the second side wall.

In this technical solution, by limiting the second end opening to be opened on the first side wall or the second side wall on both sides of the bottom wall in the width direction of the cover plate assembly, it is ensured that the contact surface between the bottom wall and the terminal assembly is flat. As such, adverse effects of the opening on the terminal assembly are avoided. Further, by limiting the second end opening to be opened on both the first side wall and the second side wall, positions for the electrolyte to flow into the inner portion of the single-cell battery from multiple directions increase.

Preferably, the first opening includes a plurality of first opening portions spaced apart from each other, and the second opening includes a plurality of second opening portions spaced apart from each other.

In this technical solution, through the above arrangement, more openings are provided for the electrolyte to flow into the inner portion of the single-cell battery.

Preferably, the plurality of first opening portions are symmetrically arranged with respect to the plurality of second opening portions in the width direction.

In this technical solution, by arranging plural first opening portions symmetrically with plural second opening portions in the width direction, it is ensured that amounts of electrolyte flowing into the inner portion of the single-cell battery from the first side wall and the second side wall are even. The electrolyte is allowed to be more evenly distributed in the inner portion of the single-cell battery. Further, it is ensured that the electrolyte flows into the inner portion of the single-cell battery from the first side wall and the second side wall at a same flow speed, so the efficiency of liquid injection is improved.

Preferably, the cover plate assembly further includes a terminal lead-out member and an explosion-proof assembly.

The terminal lead-out member sequentially passes through a first terminal lead-out hole on the insulating body and a second terminal lead-out hole on the cover plate body.

The explosion-proof assembly is arranged on an exhaust hole on the cover plate body. The insulating body is provided with an exhaust region at a position corresponding to the exhaust hole in the thickness direction.

Herein, the insulating body is provided with a liquid injection region between the first terminal lead-out hole and the exhaust region. A projection of the liquid injection hole in the thickness direction is located within the liquid injection region.

The first opening of the second channel is located in the liquid injection region, and/or the second opening of the second channel is located in the liquid injection region.

In this technical solution, by arranging the first opening in the liquid injection region, the first opening is closer to the liquid injection hole. As such, flowing paths between the first end opening and the second end opening are decreased. By arranging the second opening in the liquid injection region, the second opening is closer to the liquid injection hole. As such, the flowing paths between the first end opening and the second end opening are decreased.

Preferably, one side of the exhaust region away from the cover plate body is a first plane, and one side of the liquid injection region away from the cover plate body is a second plane. The first plane and the second plane are located in a same plane.

In this technical solution, by arranging the first plane and the second plane in the same plane, it is ensured that the contact surface between the insulating body and the terminal assembly is a flat surface. As such, protrusions on the insulating body are prevented from puncturing the terminal assembly, and adverse effects such as short circuits are thus prevented from occurring.

In this technical solution, by setting the exhaust region and the liquid injection region to be integrally formed, overall strength of the insulating body is improved.

Preferably, the insulating body further includes a terminal region where the first terminal lead-out hole is arranged. A recessed portion for accommodating the terminal lead-out member is formed on one side of the terminal region away from the cover plate body.

A height difference between a terminal lead-out member end surface and the second plane is less than or equal to 0.5 mm in the thickness direction. Herein, the terminal lead-out member end surface is an end surface of the terminal lead-out member away from the cover plate body.

In this technical solution, by arranging a range of the height difference between the terminal lead-out member end surface and the second plane, it is ensured that the contact surface between the insulating body and the terminal assembly is essentially a flat surface. As such, transition steps between different surfaces are prevented from puncturing the terminal assembly, so short circuits and adverse effects are prevented from being generated.

Preferably, the terminal lead-out member end surface and the second plane are located in a same plane.

In this technical solution, by arranging the terminal lead-out member end surface and the second plane in the same plane, it is ensured that the contact surface between the insulating body and the terminal assembly is a flat surface. As such, adverse effects of the opening on the terminal assembly 4 may be avoided.

Preferably, the exhaust region further includes a reinforcing rib, which is arranged on the bottom wall. A height of the reinforcing rib is less than or equal to a height of a higher side wall of the first side wall and the second side wall.

In this technical solution, by arranging the reinforcing rib in the exhaust region, overall structural strength of the exhaust region of the insulating body is enhanced. Further, by setting the height of the reinforcing rib to be less than or equal to the height of the higher side wall of the first side wall and the second side wall, interference between the reinforcing rib and the assembly of the insulating body and the cover plate body is prevented from being generated.

Preferably, the reinforcing rib is connected between the first side wall and the second side wall.

The first side wall and the second side wall both abut against the cover plate body.

A gap is provided between the reinforcing rib and the cover plate body.

In this technical solution, through the above arrangement, a specific arrangement manner of the reinforcing rib is provided.

Preferably, an area of the first opening is 10% to 90% of an area of the first side wall located in the liquid injection region, and/or an area of the second opening is 10% to 90% of an area of the second side wall located in the liquid injection region.

In this technical solution, by limiting a range of the area of the first opening, maximum supporting strength of the first side wall of the insulating member is ensured while allowing more electrolyte to flow into the inner portion of the single-cell battery. The injection process is thus quickly completed. By limiting a range of the area of the second opening, maximum supporting strength of the second side wall of the insulating member is ensured while allowing more electrolyte to flow into the inner portion of the single-cell battery. The injection process is thus quickly completed.

Preferably, an outer surface of the side wall is provided with a heat melt region for connecting a covering insulating member. The second end opening of the second channel is spaced apart from the heat melt region.

In this technical solution, by arranging the second end opening of the second channel being spaced apart from the heat melt region, interference between the second end opening and the connection of the covering insulating member is prevented from occurring.

Preferably, the second channel has a plurality of the first end openings, and the first end openings are spaced apart from each other on the convex portion along a circumference of the liquid guiding through hole.

In this technical solution, by arranging plural first end openings, more openings for the electrolyte to flow into the second channel are provided. Further, the plural first end openings are spaced apart from each other along the circumference of the liquid guiding through hole on the convex portion, so the electrolyte is allowed to enter the second channel more uniformly.

Preferably, at least one of the first end opening and the second end opening of the second channel is a groove or a through hole.

In this technical solution, through the above arrangement, a specific arrangement manner of the first end opening and the second end opening is provided.

Preferably, a projection of the liquid injection hole in the thickness direction is located within an outer periphery of the liquid guiding through hole.

In this technical solution, by setting the projection of the liquid injection hole in the thickness direction within the outer periphery of the liquid guiding through hole, all the electrolyte flowing from the liquid injection hole enters the liquid guiding through hole and flow into the inner portion of the single-cell battery through predetermined channels. That is, the electrolyte is allowed to flow into the inner portion of the single-cell battery through liquid outlets located at different positions of different predetermined channels, so that the liquid injection process is accelerated, and the risk of a loose separator reversely blocking the liquid injection hole is lowered.

Preferably, the insulating body includes a first portion and a second portion connected in a length direction. Each of the first portion and the second portion includes a main body and a connecting portion. Each of a first portion main body and a second portion main body is provided with a first terminal lead-out hole. A terminal lead-out member passes through the first terminal lead-out hole. A first portion connecting portion and a second portion connecting portion are connected and overlapped in the thickness direction.

In this technical solution, by setting the insulating body to include the first portion and the second portion connected in the length direction and specific structures and a connection manner of the first portion and the second portion, the insulating body can be easily assembled and disassembled.

Preferably, one side of the first portion main body away from the cover plate body is a first side. One side of the second portion main body away from the cover plate body is a second side. The first side and the second side are both flat surfaces and are located in a same plane. One side of the first portion connecting portion away from the cover plate body is a third side. One side of the second portion connecting portion away from the cover plate body is a fourth side. The third side and the fourth side are both recessed in a direction approaching the cover plate body in a plane where the first side and the second side are located.

In this technical solution, by setting both the first side and the second side as flat surfaces and located in the same plane, it is ensured that the contact surface between the insulating body and the terminal assembly is a flat surface, so the opening is prevented from causing adverse effects on the terminal assembly. Further, by arranging both the third side and the fourth side to be recessed toward the direction approaching the cover plate body in the plane where the first side and the second side are located, the third side and the fourth side are prevented from affecting the contact surface between the insulating body and the terminal assembly to be a flat surface.

Preferably, the insulating member further includes a buckle assembly including a first buckle member and a second buckle member that are buckled together. The first buckle member is arranged on the first portion connecting portion. The second buckle member is arranged on the second portion connecting portion corresponding to the first buckle member. One side of the buckle assembly away from the cover plate body is recessed in the direction approaching the cover plate body in the plane where the first side and the second side are located.

In this technical solution, through the arrangement of the buckle assembly, a specific connection manner between the first portion and the second portion is provided, and the first portion and the second portion can thus be easily manufactured and assembled. Through the arrangement of the side of the buckle assembly away from the cover plate body to be recessed in the direction approaching the cover plate body in the plane where the first side and the second side are located, the buckle is prevented from puncturing the terminal assembly, and adverse effects such as short circuits are thus prevented from occurring.

The disclosure further provides a single-cell battery which includes a casing, the cover plate assembly as described above, covering the casing and defining a receiving chamber together with the casing, and a terminal assembly, received in the receiving chamber.

The positive progress effects provided by the disclosure include the following.

In the disclosure, by setting a specific structure of the insulating member, arranging the second channel communicating with the first channel, opening the first end opening of the second channel on the side surface of the convex portion, and opening the second end opening of the second channel on the insulating body, the electrolyte is allowed to flow into the inner portion of the single-cell battery through the liquid outlets located at different positions of different channels, so that the liquid injection process is accelerated.

### BRIEF DESCRIPTION OF THE DRAWINGS

FIG. 1 is an exploded three-dimensional schematic view of a structure of a single-cell battery according to a preferred embodiment of the disclosure.
FIG. 2 is a three-dimensional schematic view of a structure of a cover plate assembly and a terminal assembly according to a preferred embodiment of the disclosure.
FIG. 3 is a three-dimensional schematic view of the structure of the cover plate assembly according to a preferred embodiment of the disclosure.
FIG. 4 is a local enlarged view of a structure of a portion A in FIG. 3.
FIG. 5 is a three-dimensional schematic view of the structure of the cover plate assembly from another viewing angle according to a preferred embodiment of the disclosure.
FIG. 6 is a three-dimensional schematic view of a structure of an insulating body and a terminal lead-out member of the cover plate assembly according to a preferred embodiment of the disclosure.
FIG. 7 is a cross-sectional schematic view of the structure of the cover plate assembly according to a preferred embodiment of the disclosure.
FIG. 8 is a local enlarged view of a structure of a portion B in FIG. 7.
FIG. 9 is a local enlarged view of a structure of a portion C in FIG. 7.
FIG. 10 is a partial three-dimensional schematic view of the structure of the insulating body of the cover plate assembly according to a preferred embodiment of the disclosure.
FIG. 11 is a local enlarged view of a structure of a portion D in FIG. 10.
FIG. 12 is a partial three-dimensional schematic view of the structure of the insulating body of the cover plate assembly from another viewing angle according to a preferred embodiment of the disclosure.
FIG. 13 is a partial schematic front view of the structure of the insulating body of the cover plate assembly according to a preferred embodiment of the disclosure.
FIG. **14** is a three-dimensional schematic view of the structure of the insulating body of the cover plate assembly of another implementation according to a preferred embodiment of the disclosure.

### DESCRIPTION OF THE EMBODIMENTS

The following is a preferred embodiment and a more clear and complete description of the disclosure together with the accompanying drawings.

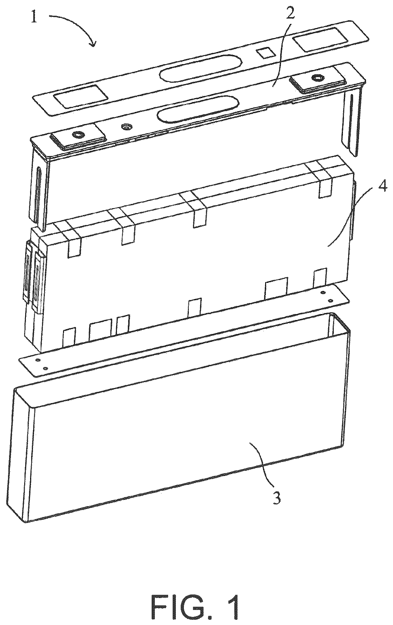

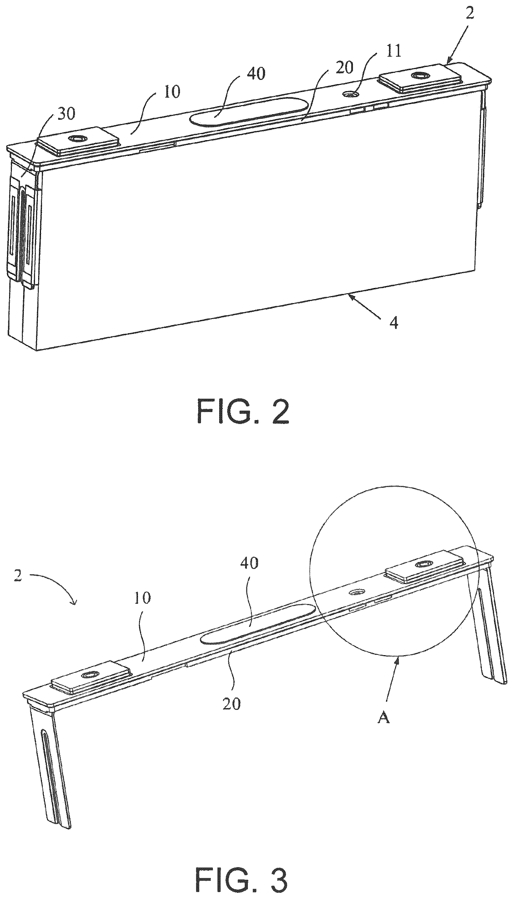

As shown in FIG. 1 and FIG. 2, this embodiment provides a cover plate assembly 2 and a single-cell battery 1 including the same. The single-cell battery 1 includes a casing 3, a cover plate assembly 2, and a terminal assembly 4.

The cover plate assembly 2 is arranged on the casing 3 and defines a receiving chamber together with the casing 3. The terminal assembly 4 is received in the receiving chamber.

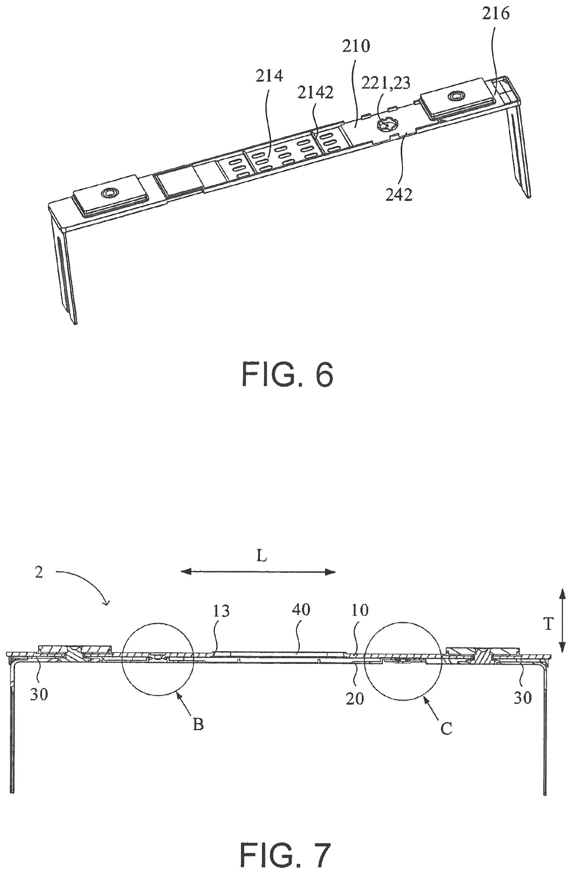

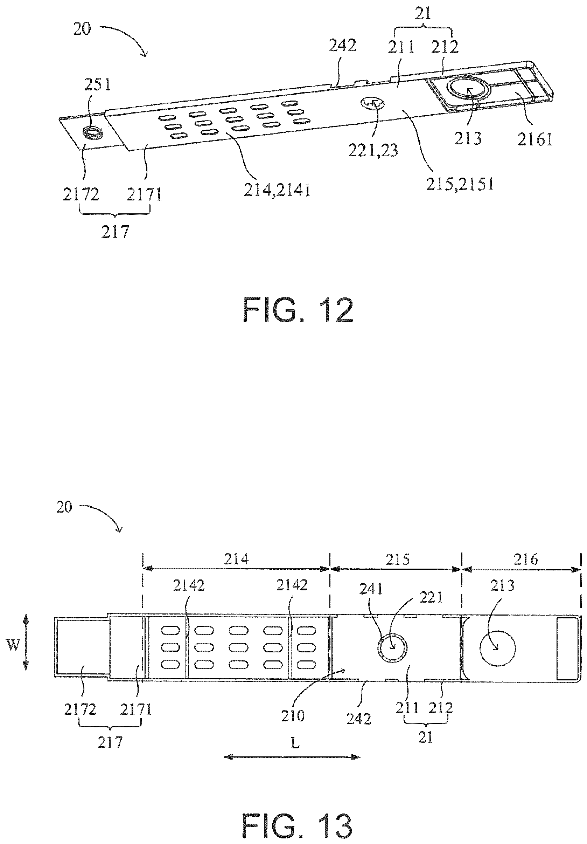

As shown in FIG. 3 to FIG. 14, the cover plate assembly 2 includes a cover plate body 10 and an insulating member 20.

A penetrating liquid injection hole 11 passes through the cover plate body 10 in a thickness direction T of the cover plate body 10.

The insulating member 20 includes an insulating body 21 and a convex portion 22 arranged on one side of the insulating body 21 facing the cover plate body 10. A liquid guiding through hole 221 passes through the convex portion 22 in the thickness direction T. The liquid guiding through hole 221 is aligned with the liquid injection hole 11 to be a first channel 23 communicating with the liquid injection hole 11.

The insulating member 20 further includes a second channel 24 communicating with the first channel 23. A first end opening 241 of the second channel 24 is opened on a side surface of the convex portion 22. A second end opening 242 of the second channel 24 is opened on the insulating body 21.

In this way, by arranging the second channel 24 communicating with the first channel 23, opening the first end opening 241 of the second channel 24 on the side surface of the convex portion 22, and opening the second end opening 242 of the second channel 24 on the insulating body 21, electrolyte may flow into an inner portion (receiving chamber) of the single-cell battery 1 through liquid outlets of different channels, and a liquid injection process is thereby accelerated.

In addition, in the related art, a negative pressure extraction process is further required during the liquid injection process inside a battery. Since a separator may become loose after heat pressing, during the negative pressure extraction process, there is a risk that the loose separator may reversely block the liquid injection hole. The negative pressure extraction of the battery may thus fail, and requirements in a production process of the battery are unable to be satisfied as a result. However, in this embodiment, due to the arrangement of the second channel 24 with its second end opening 242 opened on the insulating body 21, the risk of a loose separator reversely blocking the liquid injection hole 11 is also lowered.

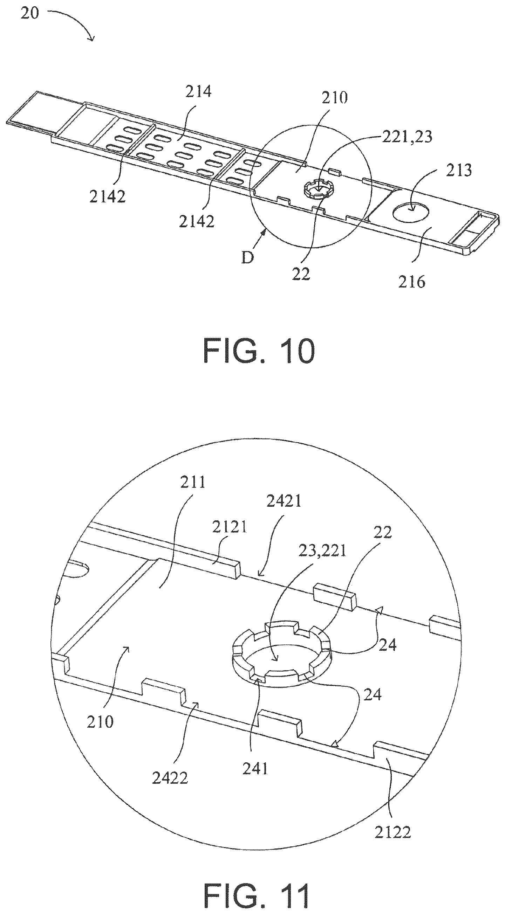

Specifically, the insulating body 21 includes a bottom wall 211 and a side wall 212. One end of the side wall 212 is connected to the bottom wall 211, and the other end of the side wall 212 extends toward the cover plate body 10. The convex portion 22 is arranged on one side of the bottom wall 211 facing the cover plate body 10. The bottom wall 211 and the side wall 212 surround and form a flow chamber 210 configured to connect the first end opening 241 and the second end opening 242. In this way, through the arrangement of a specific structure of the insulating body 21, the flow chamber 210 is formed on the side of the insulating body 21 facing the cover plate body 10, so a channel connecting the first end opening 241 and the second end opening 242 is formed. It should be noted that in FIG. 11, the electrolyte flows into the inner portion of the single-cell battery 1 along the second channel 24 (in the direction of the hollow arrow). That is, the electrolyte flows into the inner portion of the single-cell battery 1 sequentially through the first end opening 241, the flow chamber 210, and the second end opening 242.

In this embodiment, the second end opening 242 is opened on the side wall 212. However, the disclosure is no limited to thereto. In other embodiments, the second end opening 242 may also be opened on the bottom wall 211, or the second end opening 242 may be opened on both the side wall 212 and the bottom wall 211. Compared to the arrangement of the second end opening 242 on the bottom wall 211, through the arrangement of the second end opening 242 on the side wall 212, a contact surface between the bottom wall 211 and the terminal assembly 4 is prevented from being an uneven surface with an opening. As such, adverse effects of the opening on the terminal assembly 4 may be avoided.

Further, the side wall 212 includes a first side wall 2121 and a second side wall 2122 arranged on both sides of the bottom wall 211 in a width direction W of the cover plate assembly 2. The second end opening 242 includes a first opening 2421 and a second opening 2422. The first opening 2421 is an opening opened on the first side wall 2121, and the second opening 2422 is an opening opened on the second side wall 2122. However, the disclosure is no limited to thereto. In other embodiments, the second end opening 242 may include only the first opening 2421 or may include only the second opening 2422.

In this way, by limiting the second end opening 242 to be opened on the first side wall 2121 or the second side wall 2122 on both sides of the bottom wall 211 in the width direction W of the cover plate assembly 2, it is ensured that the contact surface between the bottom wall 211 and the terminal assembly 4 is flat. As such, adverse effects of the opening on the terminal assembly can be avoided. Further, by limiting the second end opening 242 to be opened on both the first side wall 2121 and the second side wall 2122, positions for the electrolyte to flow into the inner portion of the single-cell battery from multiple directions increase.

The first opening 2421 includes a plurality of first opening portions spaced apart from each other, and the second opening 2422 includes a plurality of second opening portions spaced apart from each other. In this embodiment, specifically, the plurality of first opening 2421 includes two first opening portions spaced apart from each other, and the plurality of second opening 2422 includes three second opening portions spaced apart from each other. In other embodiments, the number of first opening portions may also be three, four, or other values, and similarly, the number of second opening portions may also be two, four, or other values. In this way, through the arrangement of plural first opening portions spaced apart from each other and plural second opening portions spaced apart from each other, more openings are provided for the electrolyte to flow into the inner portion of the single-cell battery 1.

In this embodiment, the two first opening portions located on the first side wall 2121 are arranged in an alternating manner in the width direction W with the three first opening portions located on the second side wall 2122. However, the disclosure is no limited to thereto. In other embodiments, it may also be that plural first opening portions are symmetrically arranged with plural second opening portions in the width direction W. In this way, by arranging plural first opening portions symmetrically with plural second opening portions in the width direction W, it may ensure that amounts of electrolyte flowing into the inner portion of the single-cell battery 1 from the first side wall 2121 and the second side wall 2122 are even. The electrolyte is allowed to be more evenly distributed in the inner portion of the single-cell battery 1. Further, it may ensure that the electrolyte flows into the inner portion of the single-cell battery 1 from the first side wall 2121 and the second side wall 2122 at a same flow speed, so the efficiency of liquid injection is improved.

The cover plate assembly 2 further includes a terminal lead-out member 30 and an explosion-proof assembly 40. The terminal lead-out member 30 sequentially passes through a first terminal lead-out hole 213 on the insulating body 21 and a second terminal lead-out hole on the cover plate body 10. The explosion-proof assembly 40 is arranged on an exhaust hole 41 on the cover plate body 10. The insulating body 21 is provided with an exhaust region 214 at a position corresponding to the exhaust hole 41 in the thickness direction T. Herein, the insulating body 21 is provided with a liquid injection region 215 between the first terminal lead-out hole 213 and the exhaust region 214. A projection of the liquid injection hole 11 in the thickness direction T is located within the liquid injection region 215.

In this embodiment, both the first opening 2421 and the second opening 2422 of the second channel 24 are located in the liquid injection region 215, making the first opening 2421 and the second opening 2422 closer to the liquid injection hole 11. As such, flowing paths between the first end opening 241 and the second end opening 242 are decreased. However, the disclosure is no limited to thereto. In other embodiments, it may also be that the first opening 2421 of the second channel 24 is located in the liquid injection region 215, while the second opening 2422 is located in other regions, such as the exhaust region 214. Alternatively, the second opening 2422 of the second channel 24 is located in the liquid injection region 215, while the first opening 2421 is located in other regions.

In this embodiment, one side of the exhaust region 214 away from the cover plate body is a first plane 2141, and one side of the liquid injection region 215 away from the cover plate body 10 is a second plane 2151. The first plane 2141 and the second plane 2151 are located in a same plane. In this way, by arranging the first plane 2141 and the second plane 2151 in the same plane, it may ensure that the contact surface between the insulating body 21 and the terminal assembly 4 is a flat surface. As such, protrusions on the insulating body 21 are prevented from puncturing the terminal assembly 4, and adverse effects such as short circuits are thus prevented from occurring.

Preferably, the exhaust region 214 and the liquid injection region 215 are integrally formed to improve overall strength of the insulating body 21. The insulating body 21 further includes a terminal region 216 where the first terminal lead-out hole 231 is arranged, and a recessed portion 2161 for accommodating the terminal lead-out member 30 is formed on one side of the terminal region 216 away from the cover plate body 10. A height difference between a terminal lead-out member end surface 31 and the second plane 2151 is less than or equal to 0.5 mm in the thickness direction T, for example, the height difference may be 0.5mm, 0.4 mm, 0.3 mm, 0.2 mm, 0.1 mm, or 0. Herein, the terminal lead-out member end surface 31 is an end surface of the terminal lead-out member 30 away from the cover plate body 10. In this way, by arranging a range of the height difference between the terminal lead-out member end surface 31 and the second plane 2151, it may ensure that the contact surface between the insulating body 21 and the terminal assembly 4 is essentially a flat surface. As such, transition steps between different surfaces are prevented from puncturing the terminal assembly 4, so short circuits and adverse effects are prevented from being generated. It should be noted that the height difference between the terminal lead-out member end surface 31 and the second plane 2151 refers to a dimensional difference between the end terminal lead-out member end surface 31 and the second plane 2151 in the thickness direction T.

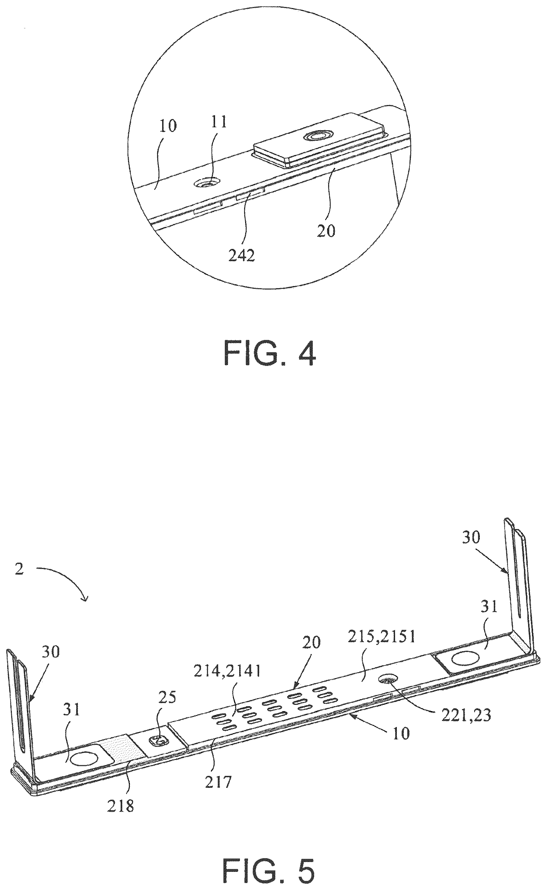

With reference to FIG. 5, in this embodiment, the terminal lead-out member end surface 31 and the second plane 2151 are located in a same plane. In this way, by arranging the terminal lead-out member end surface 31 and the second plane 2151 in the same plane, it may ensure that the contact surface between the insulating body 21 and the terminal assembly 4 is a flat surface. As such, adverse effects of the opening on the terminal assembly 4 may be avoided.

The exhaust region 214 further includes a reinforcing rib 2142, which is arranged on the bottom wall 211. A height of the reinforcing rib 2142 is less than or equal to a height of a higher side wall 212 of the first side wall 2121 and the second side wall 2122. In this way, by arranging the reinforcing rib 2142 in the exhaust region 214, overall structural strength of the exhaust region of the insulating body 21 may be enhanced. Further, by setting the height of the reinforcing rib 2142 to be less than or equal to the height of the higher side wall 212 of the first side wall 2121 and the second side wall 2122, interference between the reinforcing rib 2142 and the assembly of the insulating body 21 and the cover plate body 10 may be prevented from being generated.

Preferably, the reinforcing rib 2142 is connected between the first side wall 2121 and the second side wall 2122, and structural strength of an insulating main body in the width direction W may be enhanced in this way. The first side wall 2121 and the second side wall 2122 both abut against the cover plate body 10. A gap is provided between the reinforcing rib 2142 and the cover plate body 10, so the assembly between the insulating main body and the cover plate body 10 is not affected.

Preferably, an area of the first opening 2421 is 10% to 90% (e.g., 10%, 20%, 30%, 40%, 50%, 60%, 70%, 80%, and 90%) of an area of the first side wall 2121 located in the liquid injection region 215, and/or an area of the second opening 2422 is 10% to 90% (e.g., 10%, 20%, 30%, 40%, 50%, 60%, 70%, 80%, and 90%) of an area of the second side wall 2122 located in the liquid injection region 215. In this way, by limiting a range of the area of the first opening 2421, it may ensure maximum supporting strength of the first side wall 2121 of the insulating member 20 while allowing more electrolyte to flow into the inner portion of the single-cell battery 1. The injection process may thus be quickly completed. By limiting a range of the area of the second opening 2422, it may ensure maximum supporting strength of the second side wall 2122 of the insulating member 20 while allowing more electrolyte to flow into the inner portion of the single-cell battery 1. The injection process may thus be quickly completed.

An outer surface of the side wall 212 is provided with a heat melt region for connecting a covering insulating member. The second end opening 242 of the second channel 24 is spaced apart from the heat melt region. In this way, by arranging the second end opening 242 of the second channel 24 being spaced apart from the heat melt region, interference between the second end opening 242 and the connection of the covering insulating member is prevented from occurring.

The second channel 24 has a plurality of the first end openings 241, and the first end openings 241 are spaced apart from each other on the convex portion 22 along a circumference of the liquid guiding through hole 221. In this embodiment, the number of the first end openings 241 of the second channel 24 is six, but the disclosure is not limited thereto. In other embodiments, the number of the first opening portions may also be two, three, four, or other values. In this way, by arranging plural first end openings 241, more openings for the electrolyte to flow into the second channel 24 are provided. Further, the plural first end openings 241 are spaced apart from each other along the circumference of the liquid guiding through hole 221 on the convex portion 22, so the electrolyte is allowed to enter the second channel 24 more uniformly.

In this embodiment, the first end opening 241 of the second channel 24 is a groove, and similarly, the second end opening 242 of the second channel 24 is a groove. However, the disclosure is no limited to thereto. In other embodiments, the first end opening 241 of the second channel 24 may also be a through hole, and the second end opening 242 of the second channel 24 may also be a through hole.

Preferably, a projection of the liquid injection hole 11 in the thickness direction T is located within an outer periphery of the liquid guiding through hole 221. In this way, by setting the projection of the liquid injection hole 11 in the thickness direction T within the outer periphery of the liquid guiding through hole 221, all the electrolyte flowing from the liquid injection hole 11 may enter the liquid guiding through hole 221 and flow into the inner portion of the single-cell battery 1 through predetermined channels. That is, the electrolyte is allowed to flow into the inner portion of the single-cell battery 1 through liquid outlets located at different positions of different predetermined channels, so that the liquid injection process is accelerated, and the risk of a loose separator reversely blocking the liquid injection hole 11 is lowered.

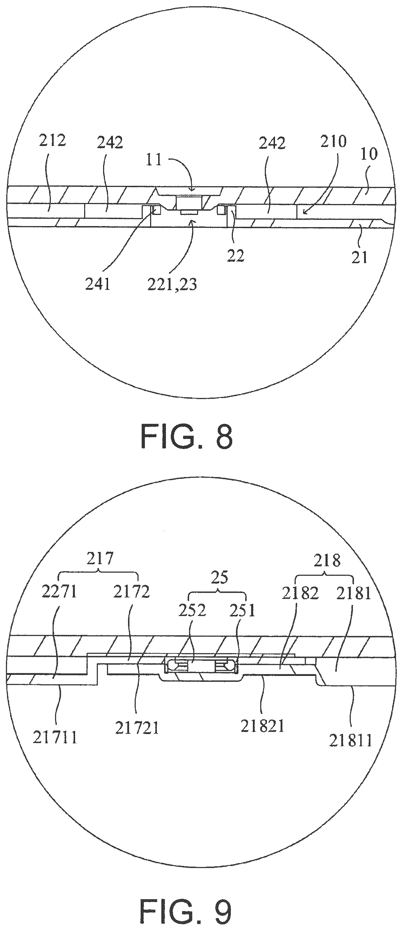

With reference to FIG. 5 and FIG. 9, the insulating body 21 includes a first portion 217 and a second portion 218 connected in a length direction L. Each of the first portion 217 and the second portion 218 includes a main body and a connecting portion. Each of a first portion main body 2171 and a second portion main body 2181 is provided with a first terminal lead-out hole 213. A terminal lead-out member passes through the first terminal lead-out hole 213. A first portion connecting portion 2172 and a second portion connecting portion 2182 are connected and overlapped in the thickness direction T. In this way, by setting the insulating body 21 to include the first portion 217 and the second portion 218 connected in the length direction L and specific structures and a connection manner of the first portion 217 and the second portion 218, the insulating body 21 may be easily assembled and disassembled.

Further, one side of the first portion main body 2171 away from the cover plate body 10 is a first side 21711, and one side of the second portion main body 2171 away from the cover plate body 10 is a second side 21811. The first side 21711 and the second side 21811 are both flat surfaces and are located in a same plane. One side of the first portion connecting portion 2172 away from the cover plate body 10 is a third side 21721, and one side of the second portion connecting portion 2182 away from the cover plate body 10 is a fourth side 21821. The third side 21721 and the fourth side 21821 are both recessed in a direction approaching the cover plate body 10 in a plane where the first side 21711 and the second side 21811 are located. In this way, by setting both the first side 21711 and the second side 21811 as flat surfaces and located in the same plane, it may ensure that the contact surface between the insulating body 21 and the terminal assembly 4 is a flat surface, so the opening is prevented from causing adverse effects on the terminal assembly 4. Further, by arranging both the third side 21721 and the fourth side 21821 to be recessed toward the direction approaching the cover plate body 10 in the plane where the first side 21711 and the second side 21811 are located, the third side 21721 and the fourth side 21821 are prevented from affecting the contact surface between the insulating body 21 and the terminal assembly 4 to be a flat surface.

In this embodiment, the insulating member 20 further includes a buckle assembly 25 including a first buckle member 251 and a second buckle member 252 that are buckled together. The first buckle member 251 is arranged on the first portion connecting portion 2172, and the second buckle member 252 is arranged on the second portion connecting portion 2182 corresponding to the first buckle member 251. One side of the buckle assembly 25 away from the cover plate body 10 is recessed in the direction approaching the cover plate body 10 in the plane where the first side 21711 and the second side 21811 are located. In this way, through the arrangement of the buckle assembly 25, a specific connection manner between the first portion 217 and the second portion 218 is provided, and the first portion 217 and the second portion 218 may thus be easily manufactured and assembled. Through the arrangement of the side of the buckle assembly 25 away from the cover plate body 10 to be recessed in the direction approaching the cover plate body 10 in the plane where the first side 21711 and the second side 21811 are located, the buckle assembly 25 is prevented from puncturing the terminal assembly 4, and adverse effects such as short circuits are thus prevented from occurring.

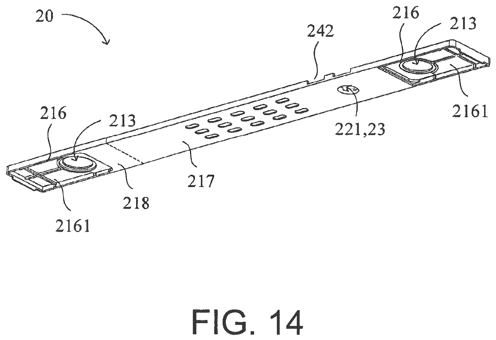

With reference to FIG. 14 again, which is a three-dimensional schematic view of a structure of the insulating main body of another implementation according to the present embodiment. In this implementation, the first portion 217 and the second portion 218 of the insulating main body are integrally formed. It should be noted that the dashed lines in FIG. 14 do not exist in the actual structure and are only used to show the division of the first portion 217 and the second portion 218 on the integral structure of the insulating main body.

In this embodiment, by setting a specific structure of the insulating member 20, arranging the second channel 24 communicating with the first channel 23, opening the first end opening 241 of the second channel 24 on the side surface of the convex portion 22, and opening the second end opening 242 of the second channel 24 on the insulating body 21, the electrolyte is allowed to flow into the inner portion of the single-cell battery 1 through the liquid outlets located at different positions of different channels, so that the liquid injection process is accelerated, and the risk of a loose separator reversely blocking the liquid injection hole 11 is lowered.

## Claims

1. A cover plate assembly (2), **characterized in** comprising:
a cover plate body (10);
a liquid injection hole (11) passing through the cover plate body (10) in a thickness direction (T) of the cover plate body (10); and
an insulating member (20) comprising an insulating body (21) and a convex portion (22) arranged on one side of the insulating body (21) facing the cover plate body (10), wherein a liquid guiding through hole (221) passes through the convex portion (22) in the thickness direction (T), and the liquid guiding through hole (221) is aligned with the liquid injection hole (11) to be a first channel (23) communicating with the liquid injection hole (11);
wherein the insulating member (20) further comprises a second channel (24) communicating with the first channel (23), a first end opening (241) of the second channel (24) is opened on a side surface of the convex portion (22), and a second end opening (242) of the second channel (24) is opened on the insulating body (21).

2. The cover plate assembly (2) according to claim 1, wherein the insulating body (21) comprises a bottom wall (211) and a side wall (212), one end of the side wall (212) is connected to the bottom wall (211), and the other end of the side wall (212) extends toward the cover plate body (10),
the convex portion (22) is arranged on one side of the bottom wall (211) facing the cover plate body (10), and the bottom wall (211) and the side wall (212) surround and form a flow chamber (210) configured to connect the first end opening (241) and the second end opening (242).

3. The cover plate assembly (2) according to claim 1 or 2, wherein the second end opening (242) is opened on at least one of the side wall (212) and the bottom wall (211).

4. The cover plate assembly (2) according to any one of claims 1 to 3, wherein the side wall (212) comprises: a first side wall (2121) and a second side wall (2122) arranged on both sides of the bottom wall (211) in a width direction of the cover plate assembly (2),
the second end opening (242) comprises at least one of a first opening (2421) and a second opening (2422), the first opening (2421) is an opening opened on the first side wall (2121), and the second opening (2422) is an opening opened on the second side wall (2122).

5. The cover plate assembly (2) according to any one of claims 1 to 4, wherein the first opening (2421) comprises a plurality of first opening portions spaced apart from each other, and
the second opening (2422) comprises a plurality of second opening portions spaced apart from each other;
wherein the plurality of first opening portions are arranged symmetrically with the plurality of second opening portions in the width direction (W).

6. The cover plate assembly (2) according to any one of claims 1 to 5, further comprising:
a terminal lead-out member (30) sequentially passing through a first terminal lead-out hole (213) on the insulating body (21) and a second terminal lead-out hole on the cover plate body (10); and
an explosion-proof assembly (40) arranged on an exhaust hole (41) on the cover plate body (10), wherein the insulating body (21) is provided with an exhaust region (214) at a position corresponding to the exhaust hole (41) in the thickness direction (T),
wherein the insulating body (21) is provided with a liquid injection region (215) between the first terminal lead-out hole (213) and the exhaust region (214), and a projection of the liquid injection hole (11) in the thickness direction (T) is located within the liquid injection region (215),
wherein the first opening (2421) of the second channel (24) is located in the liquid injection region (215), and the second opening (2422) of the second channel (24) is located in the liquid injection region (215).

7. The cover plate assembly (2) according to any one of claims 1 to 6, wherein one side of the exhaust region (214) away from the cover plate body (10) is a first plane (2141), one side of the liquid injection region (215) away from the cover plate body (10) is a second plane (2151), and the first plane (2141) and the second plane (2151) are located in a same plane.

8. The cover plate assembly (2) according to any one of claims 1 to 7, wherein the insulating body (21) further comprises a terminal region (216) where the first terminal lead-out hole (213) is arranged, and a recessed portion (2161) for accommodating the terminal lead-out member (30) is formed on one side of the terminal region (216) away from the cover plate body (10),
a height difference between a terminal lead-out member end surface (31) and the second plane (2151) is less than or equal to 0.5 mm in the thickness direction (T), wherein the terminal lead-out member end surface (31) is an end surface of the terminal lead-out member (30) away from the cover plate body (10).

9. The cover plate assembly (2) according to any one of claims 1 to 8, wherein the terminal lead-out member end surface (31) and the second plane (2151) are located in a same plane.

10. The cover plate assembly (2) according to any one of claims 1 to 9, wherein the exhaust region (214) further comprises a reinforcing rib (2142), which is arranged on the bottom wall (211), and a height of the reinforcing rib (2142) is less than or equal to a height of a higher side wall (212) of the first side wall (2121) and the second side wall (2122).

11. The cover plate assembly (2) according to any one of claims 1 to 10, wherein the reinforcing rib (2142) is connected between the first side wall (2121) and the second side wall (2122),
the first side wall (2121) and the second side wall (2122) both abut against the cover plate body (10), and
a gap is provided between the reinforcing rib (2142) and the cover plate body (10).

12. The cover plate assembly (2) according to any one of claims 1 to 11, wherein an area of the first opening (2421) is 10% to 90% of an area of the first side wall (2121) located in the liquid injection region (215), and an area of the second opening (2422) is 10% to 90% of an area of the second side wall (2122) located in the liquid injection region (215).

13. The cover plate assembly (2) according to any one of claims 1 to 12, wherein an outer surface of the side wall (212) is provided with a heat melt region for connecting a covering insulating member (20), and the second end opening (242) of the second channel (24) is spaced apart from the heat melt region.

14. The cover plate assembly (2) according to any one of claims 1 to 13, wherein the second channel (24) has a plurality of the first end openings (241), and the first end openings (241) are spaced apart form each other on the convex portion (22) along a circumference of the liquid guiding through hole (221).

15. The cover plate assembly (2) according to any one of claims 1 to 14, wherein at least one of the first end opening (241) and the second end opening (242) of the second channel (24) is a groove or a through hole.

16. The cover plate assembly (2) according to any one of claims 1 to 15, wherein a projection of the liquid injection hole (11) in the thickness direction (T) is located within an outer periphery of the liquid guiding through hole (221).

17. The cover plate assembly (2) according to any one of claims 1 to 16, wherein the insulating body (21) comprises a first portion (217) and a second portion (218) connected in a length direction (L), each of the first portion (217) and the second portion (218) comprises a main body and a connecting portion, each of a first portion main body (2171) and a second portion main body (2181) is provided with a first terminal lead-out hole (213), a terminal lead-out member (30) passes through the first terminal lead-out hole (213), and a first portion connecting portion (2172) and a second portion connecting portion (2182) are connected and overlapped in the thickness direction (T).

18. The cover plate assembly (2) according to any one of claims 1 to 17, wherein one side of the first portion main body (2171) away from the cover plate body (10) is a first side (21711), one side of the second portion main body (2181) away from the cover plate body (10) is a second side (21811), the first side (21711) and the second side (21811) are both flat surfaces and are located in a same plane, one side of the first portion connecting portion (2172) away from the cover plate body (10) is a third side (21721), one side of the second portion connecting portion (2182) away from the cover plate body (10) is a fourth side (21821), and the third side (21721) and the fourth side (21821) are both recessed in a direction approaching the cover plate body (10) in a plane where the first side (21711) and the second side (21811) are located.

19. The cover plate assembly (2) according to any one of claims 1 to 18, wherein the insulating member (20) further comprises a buckle assembly (25) comprising a first buckle member (251) and a second buckle member (252) that are buckled together, the first buckle member (251) is arranged on the first portion connecting portion (2172), the second buckle member (252) is arranged on the second portion connecting portion (2182) corresponding to the first buckle member (251), and one side of the buckle assembly (25) away from the cover plate body (10) is recessed in the direction approaching the cover plate body (10) in the plane where the first side (21711) and the second side (21811) are located.

20. A single-cell battery (1), **characterized in** comprising:
a casing (3);
the cover plate assembly (2) according to any one of claims 1 to 19, wherein the cover plate assembly (2) covers the casing (3) and defines a receiving chamber together with the casing (3); and
a terminal assembly (4) received in the receiving chamber.
